(19) Europäisches Patentamt
European Patent Office
Office européen des brevets

(11) Publication number: 0 231 666 B1

# (12) EUROPEAN PATENT SPECIFICATION

(45) Date of publication of patent specification: 31.10.90

(51) Int. Cl.[5]: C 08 F 283/00, C 09 D 167/02, C 08 G 18/63

(21) Application number: 86310232.3

(22) Date of filing: 31.12.86

## (54) Polyester graft copolymers and flexible coating compositions comprising same.

(30) Priority: 06.01.86 US 816495

(43) Date of publication of application: 12.08.87 Bulletin 87/33

(45) Publication of the grant of the patent: 31.10.90 Bulletin 90/44

(84) Designated Contracting States: AT BE DE ES FR GB IT SE

(56) References cited:
EP-A-0 001 789
DE-A-2 411 506
US-A-3 485 732
US-A-3 882 189

CHEMICAL ABSTRACTS, vol. 92, no. 4, January 1980, page 8, abstract no. 22929m, Columbus, Ohio, US; S. HUDECEK et al.: "Copolymerization of polyurethane macromer with 2-hydroxyethyl methacrylate. NMR kinetic study", & PREP. SHORT CONTRIB. - BRATISLAVA IUPAC INT. CONF. MODIF. POLYM., 5TH 1979, 1, 159-63

(73) Proprietor: E.I. DU PONT DE NEMOURS AND COMPANY
1007 Market Street
Wilmington Delaware 19898 (US)

(72) Inventor: Kordomenos, Panagiotis I.
42758 Elizabeth Circle
Mt. Clemens Michigan 48044 (US)
Inventor: Ryntz, Rose Ann
38671 Levisham
Mt. Clemens Michigan 48044 (US)

(74) Representative: Woodcraft, David Charles et al
BROOKES & MARTIN High Holborn House 52/54
High Holborn
London, WC1V 6SE (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 231 666 B1

Courier Press, Leamington Spa, England.

## Description

TECHNICAL FIELD

This invention relates to resins and flexible coating compositions comprising same which have excellent adherence to metal and plastic and possess superior weathering properties. More particularly, the invention relates to hydroxy functional polyester graft copolymers and to coating compositions comprising same.

BACKGROUND

Recently, there has been interest in the use of resilient coating materials for areas which are subject to mechanical shock, such as automobile bumpers, moldings and front ends. To maintain the desired appearance for a protective coating on a motor vehicle body panel or like application, any such coating must have certain properties, such as a high degree of extensibility, impact resistance, and resistance to cracking and degradation under severe environmental conditions such as low temperature and high humidity. Conventional coatings, including those heretofore employed on rubber and similar extensible objects, do not have the required combination of properties. Generally, compositions that are flexible enough to be applied over both metal and plastic substrates have rather poor weatherability, appearance, and/or overall durability.

U.S. Patent 3,882,189 and U.S. Patent 3,962,522 are exemplary of numerous patents which describe flexible coating compositions, wherein the resin comprises polyurethane modified polyesters formed by reacting polyisocyanate with polyester polyols. These resins are cured with amine-aldehyde crosslinkers. It is taught therein, that the presence of the urethane groups in the polymer significantly contributes to the flexibility as well as improved weathering properties, gloss, and abrasion resistance of the coating. Such coatings, however, are not of an overall quality to meet certain applications, particularly automotive applications. Accordingly, it is an object of the present invention to provide novel polyester graft copolymers and solvent based, thermosetting coating compositions comprising same, suitable to produce flexible cured coatings with good adhesion over diverse substrates including metal and plastic. In this regard, it is a particular object of the invention to provide such flexible coating compositions at sufficiently low Volatile Organic Content (VOC) to aid in meeting governmental emissions guidelines and yet which can be applied to a substrate by spraying or other known methods. It is another object of the invention to provide a composition which will form a coating on a substrate, which coating has advantageous physical properties including, for example, humidity and solvent resistance, flexibility and corrosion protection for the underlying substrate.

Additional aspects and advantages of the invention will be apparent from the following description thereof.

DISCLOSURE OF THE INVENTION

According to the present invention, a novel, non-gelled, hydroxy functional polyester graft copolymer is provided. The copolymer is crosslinkable by hydroxy-reactive crosslinking agent and, in particular, is suitable for use in thermosetting coating compositions adapted to form a flexible cured coating over a variety of substrates, such as metal and plastic. The copolymer of the invention is hydroxy functional polyester graft copolymer suitable for flexible, thermosetting coating compositions over metal and plastic substrates, which copolymer has number average molecular weight between 1,000 and 15,000, has a hydroxyl number between 30 and 300, and is the reaction product of carbon-carbon double bond-reactive monoethylenically unsaturated monomer with hydroxy functional carbon-carbon double bond bearing branched polyester macromer, under free radical polymerization reaction conditions, said monomer bearing substantially no functionality which is substantially reactive with hydroxy functionality of said macromer under said reaction conditions and said macromer being the reaction product of (i) epoxy acrylate having the formula:

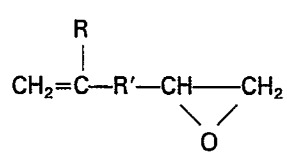

wherein R is hydrogen or C1 to C7 alkyl, and R′ is C1 to C7 alkylene or $COO(CH_2)_n$, n being 0 to 7 with (ii) hydroxy functional polyester having 0—10 urethane groups per molecular which polyester comprises the reaction product of dicarboxylic acid with polyol comprising at least 5 percent by weight triol, said dicarboxylic acid being selected from the group consisting of saturated and unsaturated, cyclic and acyclic aliphatic dicarboxylic acids and aromatic dicarboxylic acids suitable anhydrides thereof and mixtures thereof, the weight ratio of macromer:monomer being in the range 90:10 to 40:60.

In some embodiments of the invention the hydroxy functional polyester graft copolymer of claim 10, wherein said aliphatic diol has a molecular weight of 60—500 and is selected from the group consisting of trimethylene glycol, triethylene glycol, 1,4-cyclohexane dimethanol, alkyl substituted or unsubstituted

propanediol, butanediol, pentanediol and hexanediol and a mixture of any of them. The diol can be selected from the hydroxy functional polyester graft copolymer of claim 8 wherein said diol is selected from the group consisting of alkyl glycol of 2—7 carbons, and any mixture thereof. The diol can be hydroxy functional polyester graft copolymer of claim 8, wherein said diol is aliphatic diol of the general formula HO—R—OH, wherein R is a divalent, aliphatic, linking moiety substantially unreactive with said dicarboxylic acid.

According to the coating composition aspect of the invention, the aforesaid copolymer is employed with polyfunctional, hydroxy-reactive crosslinking agent selected from aminoplast crosslinking agent, polyisocyanate crosslinking agent, blocked polyisocyanate groups blocked by reaction with active hydrogen bearing blocking agent, and any compatible mixture thereof. The crosslinking agent is included in an amount sufficient to provide, at a cure temperature of the composition, between about 0.5 and about 1.6 hydroxy-reactive groups per hydroxy group contributed by the hydroxy functional polyester graft copolymer.

The coating compositions of the invention can be formulated as either one component coating compositions or two component coating compositions. Typically, unblocked polyisocyanate crosslinking agent is employed in two component compositions in view of its reactivity. A composition of the invention can be formulated, for example, as a one component primer, typically employing blocked polyisocyanate or aminoplast crosslinking agent, as a one component topcoat, preferably employing aminoplast crosslinking agent, or as a two component coating, typically employing polyisocyanate crosslinking agent. Also, the polyester graft copolymer of the invention can be formulated as a pigmented base coat, typically a one component composition, for a base coat/clear coat system such as are known for use as automotive finishes. It also can be formulated as the clear coat thereof, either as a one component or a two component composition.

Advantageously, the flexible coatings of the invention possess superior weathering properties as well as excellent adhesion to metal and plastic, thus making them well suited for use as coatings on, for example, various motor vehicle components. The ability to use the same coating composition on metal and plastic components in motor vehicle production offers distinct commercial advantages, particularly in terms of production efficiency. Additionally, because these coatings can be employed on metal as well as plastic components, the problem of color matching, which must be resolved when using different coatings on metal and plastic parts which are to be in proximity to one another, is eliminated. These and additional features and advantages of the invention will be better understood in view of the following detailed disclosure.

## DETAILED DESCRIPTION OF THE INVENTION

The resin of the invention is a novel, hydroxy functional polyester graft copolymer of number average molecular weight ($M_n$) between 1,000 and 15,000, preferably between 1,000 and 4,000, and having a hydroxyl number between 30 and 300, preferably between 50 and 150. The resin is optionally urethane-modified, more specifically, containing about 0—10 urethane linkages per molecule. Preferably, the resin contains about 0—5 urethane linkages per molecule. As disclosed above, the resin is the reaction product of carbon-carbon double bond-reactive monoethylenically unsaturated monomer with certain hydroxy functional carbon-carbon double bond-bearing branched polyester macromer. The weight ratio of macromer:monomer is 90:10 to 40:60. Each of these reactants is discussed below in greater detail.

### *Carbon-Carbon Double Bond-Reactive Monoethylenically Unsaturated Monomer*

Numerous carbon-carbon double bond-reactive monoethylenically unsaturated monomers suitable for making the polyester graft copolymer are known to the skilled of the art. Included are many which are commercially available and many which will be readily apparent in view of the present disclosure. The choice of monomer reactant employed in making the polyester graft copolymer will depend to a large extent upon the particular application intended for the resin or for the coating composition in which the resin is to be used. Examples of suitable monoethylenically unsaturated monomers include, for example, vinyl aromatic hydrocarbons such as styrene, alpha methyl styrene, and vinyl toluene, vinyl acetate, vinyl chloride, and the like.

Preferred monomers are acrylate monomers. Numerous acrylate monomers suitable for preparing the hydroxy functional polyester graft copolymer are known to the skilled of the art and include many which are commercially available and which will be readily apparent in view of the present disclosure. As noted above, the choice of monomer reactant employed in preparing the resin of the invention will depend to a large extent upon the particular application intended for the resin or for the composition in which the resin is used. Suiotable hydroxy-substituted alkyl(meth)acrylates (where "alkyl(meth)acrylates" means, in the alternative, alkylacrylates and alkylmethacrylates) which can be employed comprise members selected from the group consisting of the following esters of acrylic or methacrylic acid and C2—C12 aliphatic glycols: 2-hydroxy ethyl acrylate, 3-chloro-2-hydroxypropyl acrylate; 2-hydroxy-1-methylethyl acrylate; 2-hydroxypropyl acrylate; 3-hydroxypropyl acrylate; 2,3-dihydroxypropyl acrylate; 2-hydroxybutyl acrylate; 4-hydroxybutyl acrylate; diethyleneglycol acrylate; 5-hydroxypentyl acrylate; 6-hydroxyhexyl acrylate; triethyleneglycol acrylate; 7-hydroxyheptyl acrylate; 2-hydroxy-1-methylethyl methacrylate; 2-hydroxypropyl methacrylate; 3-hydroxypropyl methacrylate; 2,3-dihydroxypropyl methacrylate; 2-hydroxybutyl

methacrylate; 4-hydroxybutyl methacrylate; 3,4-dihydroxybutyl methacrylate; 5-hydroxypentyl methacrylate; 6-hydroxyhexyl methacrylate; 1,3-dimethyl-3-hydroxybutyl methacrylate; 5,6-dihydroxyhexyl methacrylate; and 7-hydroxyheptyl methacrylate. Although one or ordinary skill in the art will recognize that many different hydroxy-substituted alkyl(meth)acrylates including those listed above could be employed, the preferred hydroxy functional monomers for use in the resin of this invention are hydroxy-substituted alkyl acrylates and methacrylates having a total of 5 to 7 carbon atoms, i.e., esters of C2—C3 dihydric alcohols and acrylic or methacrylic acids, such as hydroxyethyl methacrylate, hydroxyethyl acrylate, hydroxypropyl methacrylate and hydroxypropyl acrylate.

Most preferably, the hydroxy-substituted alkyl(meth)acrylate monomer comprises a compound of the formula:

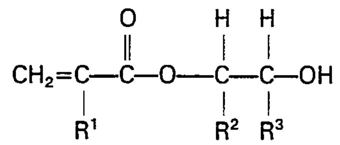

wherein $R^1$ is hydrogen or methyl and $R^2$ and $R^3$ are independently selected from the group consisting of hydrogen and alkyl of from 1 to 6 carbon atoms. Illustrative of these particularly suitable hydroxy-substituted alkyl(meth)acrylate monomers are 2-hydroxyethyl methacrylate, 2-hydroxyethyl acrylate, 2-hydroxypropyl acrylate, 2-hydroxybutyl acrylate 2-hydroxy-1-methylhexyl acrylate.

Suitable non-hydroxy substituted alkyl(meth)acrylate monomers which may be employed are (meth)-acrylates (as before, meaning esters of either acrylic or methacrylic acids) as well as mixtures of acrylates and vinyl hydrocarbons. Preferred non-hydroxy substituted monomers are esters of C1—C12 monohydric alcohols and acrylic or methacrylic acids, e.g., methylmethacrylate, ethylacrylate, butylacrylate, butylmethacrylate, hexylacrylate, 2-ethylhexylacrylate, lauryl-methacrylate, glycidyl methacrylate, methyl acrylate, propyl acrylate, propyl methacrylate and the like.

Particularly preferred non-hydroxy substituted monomers are compounds selected from the group consisting of monomers of the formula:

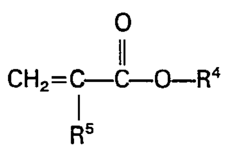

wherein $R^4$ is alkyl of from 1 to 6 carbon atoms and $R^5$ is hydrogen or methyl. Particularly preferred are butyl acrylate, butyl methacrylate and methyl methacrylate.

The aforesaid monovinyl aromatic hydrocarbons, preferably containing from 8 to 12 carbon atoms, including styrene, alpha-methyl styrene, vinyl toluene, t-butyl styrene, chlorostyrene and the like, when employed, will generally be present in an amount of from 5 to 95 weight percent, preferably from 5 to 25 weight percent of the total monoethylenically unsaturated monomer.

In addition, other suitable monoethylenically unsaturated monomers such as vinyl chloride, acrylonitrile, methacrylonitrile, vinyl acetate, acrylic acid and methacrylic acid also may be employed. In the case of acrylic acid, when employed, this monomer will generally be present in an amount from 2 to 5 weight percent of the total monomer mixture. The remaining above-mentioned monomers will generally be used in an amount of from 3 to 10 weight percent of the monomer mixture, when employed.

*Hydroxy Functional Carbon-Carbon Double Bond-Bearing Branched Polyester Macromer*

The hydroxy functional polyester macromer is reacted with the above described monoethylenically unsaturated monomer according to any of various methods well known to the skilled of the art, which methods will be apparent in view of the present disclosure. Specifically, the macromer and the monomer are employed in a weight ratio of from about 90:10 to about 40:60, more preferably from about 75:25 to about 50:50, respectively. Preferably, all double bonds of the macromer are reacted with monomer double bonds. It will be apparent that the resulting resin will be hydroxy functional by virtue of the macromer hydroxyl groups and the monomer hydroxyl groups (if any). Suitable reaction conditions will be apparent to the skilled of the art and, generally, will include a solvent system and reaction temperature favoring free radical polymerization reaction.

The hydroxy functional polyester macromer is the reaction product of any of certain epoxy acrylate with any of certain hydroxy functional polyester. Each of these reactants is discussed below in greater detail.

*Epoxy Acrylate*

Epoxy acrylate reactants suitable for reaction with hydroxy functional polyester in making the polyester macromer of the invention are those according to the formula:

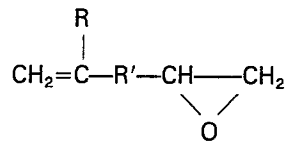

wherein R preferably is hydrogen or alkyl of 1 to 7 carbons and R′ is a hydrocarbon linking moiety, preferably alkylene or $COO(CH_2)_n$, n being 0 to 7. Numerous such epoxy acrylates are well known to the skilled of the art and include many which are commercially available or readily prepared according to known methods. The choice of epoxy acrylate employed in preparing the polyester macromer will depend largely upon the particular application intended for the final resin or composition comprising the resin. Preferred epoxy acrylates include, for example, glycidyl acrylate, glycidyl methacrylate and a mixture thereof.

*Hydroxy Functional Polyester*

The hydroxy functional polyester has a number average molecular weight ($M_n$) preferably between 1,000 and 10,000, more preferably between 1,000 and 3,000, and has a hydroxyl number preferably between 30 and 300, more preferably between 50 and 150. As discussed further below, the polyester preferably, but not necessarily, is urethane modified, that is, bears urethane linkages in the polyester backbone. Suitable hydroxy functional polyesters, both urethane modified and unmodified, are known to the skilled of the art and will be apparent in view of the present disclosure. Such compounds can be prepared according to known methods which also will be apparent in view of the present disclosure. The choice of polyester reactant will depend to a large extent upon the particular application intended for the final resin or composition in which such resin is used.

The epoxy acrylate and polyester are reacted together according to known methods and reaction conditions. Typically, these two reactants are employed in molar ratio of 2:1 to 1:2, more preferably about 1:1. More generally, the epoxy acrylate is used in an amount insufficient to yield a gelled reaction product. Also, the epoxy acrylate reactant is used in an amount insufficient to react with all of the hydroxy functionality of the polyester, since the reaction product, the branched polyester macromer, must have hydroxy functionality to react with the crosslinking agent during cure. In preparing the macromer a catalyst should be employed for the reaction between the epoxy functionality of the epoxy acrylate and the hydroxy functionality of the polyester. Suitable catalysts for this reaction are known and include commercially available catalysts, such as sulfonic acid catalyst, for example CG 21-746 (trademark) available from Ciba Geigy Corp., Ardsley, N.Y., and phosphine catalysts, for example Shell 1201 (trademark; Shell Chemical Co.). Additional suitable catalysts will be apparent in view of the present disclosure. It is also preferred to employ an agent to inhibit polymerization reaction of the carbon-carbon double bonds of the epoxy acrylate reactant. Suitable inhibiting agents are well known and include, for example, hydroquinone and others which will be apparent in view of this disclosure.

One suitable class of polyester reactants comprises the reaction products of polyol with dicarboxylic acid or an anhydride thereof and most preferably such polyesters are oligomeric polyesters. Preferably, the diacid is selected from the group consisting of saturated and unsaturated, cyclic and acyclic aliphatic dicarboxylic acids, aromatic dicarboxylic acids, and suitable anhydrides thereof. Preferred dicarboxylic acid are the $C_6$—$C_{36}$ acids, which include, for example, adipic, azelaic, sebacic, dodecane dicarboxylic acid, and cyclohexanedicarboxylic acid phthalicanhydride and dimer acids. More preferably, the dicarboxylic acids employed are aliphatic dicarboxylic acids, most preferably additionally being linear, for example adipic, azelaic, dimer, and dodecanoic. Also suitable for use as diacid are blocked dicarboxylic acids such as dimethyl-1,4-cyclohexanedicarboxylate. Mixtures of suitable diacids and/or their anhydrides may also be used as the dicarboxylic acid component in this invention.

Numerous suitable polyols for use in making the hydroxy functional polyester are known to the skilled of the art and will be readily apparent in view of the present disclosure. Included are many commercially available polyols and others which are readily prepared according to known methods. Preferably, the polyol comprises diol and triol in hydroxyl equivalent ratio of from 4:1 to 1:4, more preferably from 3:1 to 3:2.5, respectively. Suitable diols include, but are not limited to, alkylene glycols, such as butylene glycol, neopentyl glycol, 1,5-pentene glycol, 3-cyclohexene-1,1-dimethylol, and other glycols such as hydrogenated bisphenol A, caprolactone diol (e.g., the reaction product of caprolactone and ethylene glycol), hydroxy alkylated bisphenol, polyether glycols, e.g., poly(oxytetramethylene) glycol, polyester diols, e.g., 2,2-dimethyl-3-hydroxypropyl-2,2-dimethyl-3-hydroxypropionate, and the like. Preferred diols are neopentyl glycol and 2,2-dimethyl-3-hydroxypropyl-2,2-dimethyl-3-hydroxypropionate, the latter material being commercially available as Esterdiol 204 (trademark; Union Carbide Corp., Danbury, Conn.). Other preferred diols have a molecular hydroxy functional polyester graft copolymer of claim 10, wherein said aliphatic diol has a molecular weight of 60—500 and is selected from the group consisting of trimethylene glycol, triethylene glycol, 1,4-cyclohexane dimethanol, alkyl substituted or unsubstituted propanediol, butanediol, pentanediol and hexanediol and a mixture of any of them.

The polyol comprises at least 5 weight percent triol and may consist substantially entirely of triol. The polyol component also may comprise tetrols and higher functionality polyols, but these generally are less

preferred. By employing diols in the polyol component in addition to the triols, the flexibility of the coating composition is generally increased. Thus, selection of the polyol component to be used in forming the polyester compositions will be dependent on the particular desired properties and application of the coating composition. When diols are employed in the polyol component, the polyol preferably comprises from 10 to 80 weight percent triols and from 90 to 20 weight percent diols. Preferred triols are conventional low molecular triols such as 1,2,6-hexanetriol, 1,1,1-trimethylolpropane, 3-(2-hydroxypropoxy)-1,1-propanediol and polycaprolactone triols, which are commercially available as, for example, Tone-301 (trademark; Union Carbide Corp., Danbury, Conn.). Additional preferred polycaprolactone triols are described in United States Patent 4,165,345. Suitable tetrols will be apparent and include, for example, pentaerythritol and the like.

While a number of types of polyols have been mentioned above as suitable for use in making the hydroxy functional polyester reactant, their disclosure is not meant to be limiting. A great many additional suitable diols, triols, etc. are known in the art and selection of other polyols which would be suitable for use would be well within the skill of those in the art in view of this disclosure.

The polyol reactant (i.e., diols, triols and optionally tetrols, etc.) and diacid reactant are combined and reacted, generally in the presence of a catalyst and at elevated temperatures, to produce the aforesaid hydroxy functional polyester. Suitable catalysts for the carboxy/hydroxy condensation reaction include such catalysts as tetraisopropyl titanate, strong acids such as p-toluene phosphonic acid, phosphoric acid, sulfuric acid and materials such as zinc oxide, antimony oxide ($Sb_2O_3$), dibutyl tin oxide, hydrated monobutyl tin oxide, and sodium acetate. Other catalysts will be apparent to those skilled in the art in view of this disclosure. The polyol and dicarboxylic acid are reacted preferably in such proportions as to provide a molar equivalent ratio of OH to COOH from 6:2 to 6:5, respectively. Sufficient polyol must be used to provide a hydroxy functional polyester product.

As noted above, the hydroxy functional polyester is optionally urethane modified and typically may contain 1—10 urethane groups per molecule. According to one embodiment of the invention, urethane groups are introduced by reaction of the above-described hydroxy functional polyester with organic diisocyanate. Such reaction is carried out according to known methods, generally in the presence of solvents commonly employed for coating formulations such as toluene, xylene, methyl amyl ketone, and the like. Numerous suitable organic diisocyanates are readily commercially available and will be apparent to the skilled of the art in view of the present disclosure. Suitable diisocyanates include hydrocarbon diisocyanate or substituted hydrocarbon diisocyanate, such as 1,6-hexamethylene diisocyanate, isophorone diisocyanate, p-phenylene diisocyanate, biphenyl diisocyanate, toluene diisocyanate, 3,3-dimethyl-4,4-biphenylene diisocyanate and diisocyanatoalkanes having an alkane moiety with B-10 C-atoms. While the diisocyanate may be any of a number of aliphatic, cycloaliphatic, and aromatic diisocyanate, it is preferred that the diisocyanate be an aliphatic diisocyanate, such as 4,4-dicyclohexylmethanediisocyanate. As would be apparent to those skilled in the art, mixtures of various diisocyanates may also be employed as the diisocyanate component used in forming urethane-modified polyester. Typically, the hydroxy functional polyester and diisocyanate are reacted in such proportions as to provide 4—10 hydroxyl groups per isocyanate group.

While urethane modification may be introduced in the manner discussed above, according to an alternative embodiment of the invention the polyol component employed in reaction with dicarboxylic acid comprises urethane modified polyol. In this case, there is no need to react with diisocyanate the polyester reaction product of polyol and dicarboxylic acid. Employing urethane modified polyol is found to provide a final resin, i.e., a polyester graft copolymer, which is somewhat more flexible than when the urethane groups are introduced by reaction of the polyester with diisocyanate. Suitable urethane modified polyols are commercially available or readily prepared according to known methods. Exemplary urethane modified diols are made by reaction of diol and diisocyanate in a molar ratio of from 4:1 to 4:3, preferably from 2:0.8 to 2:1.2, more preferably 2:1. Suitable diols and diisocyanates include those mentioned above. Such ratio of diol to diisocyanate (i.e., a molar excess of diol) causes the reaction product to be substantially free of unreacted isocyanate groups. This urethane modified diol is then combined with other portions of the polyol reactant (e.g., additional diol, triol, tetrol, etc.) and the dicarboxylic acid reactant, generally at elevated temperature and in the presence of a catalyst (as discussed above) to produce the hydroxy functional polyester, specifically, a hydroxy functional urethane modified polyester. It will be apparent to those skilled in the art, that urethane modified triol, urethane modified tetrols, etc. can be used in addition to or in lieu of urethane modified diol, according to the methods and guidelines discussed above, to provide hydroxy functional urethane modified polyester.

*Coating Compositions*

According to another aspect of the invention, the above-described hydroxy functional polyester graft copolymer is employed in an organic solvent based thermosetting coating composition together with suitable polyfunctional hydroxy-reactive crosslinking agent. Such crosslinking agent is selected, preferably, from aminoplast crosslinking agents and polyisocyanate crosslinking agents, either blocked or unblocked depending upon the intended application. Coating compositions of the invention can be formulated so as to be suitable for numerous different applications including, particularly, as motor vehicle body panel coatings. Thus, for example, a coating composition of the invention can be formulated as a

primer or as a topcoat, such as a basecoat for a basecoat/clearcoat system, a clearcoat for a basecoat/clearcoat system, or as a one-coating topcoat. Morevoer, any of these coatings can be formulated as either a one-component (i.e., resin and crosslinker combined) or a two-component (i.e., resin and crosslinker segregated) coating composition, except that the basecoat of a base/clear system generally would be formulated only as a one-component coating in view of the high pigment content thereof and the mixing and dispersion problems which would result in attempting to add the crosslinking agent at the time of application to a substrate. It is, of course, well known to the skilled of the art to employ unblocked polyisocyanate crosslinking agents generally only in two-component formulations to prevent premature reaction thereof with the hydroxy functional copolymer. Blocked polyisocyanate crosslinkers are employed in one-component coatings, but typically these are employed in primers since the two-component unblocked polyisocyanate coatings of the invention are found generally to provide better surface appearance. The amino resin crosslinking agents also are employed, typically, in one component formulations.

In a coating composition intended for use as a high solids basecoat or clear coat of a base/clear automotive coating formulation, typically it is preferred that the polyester graft copolymer have a number average molecular weight ($M_n$) between 1,500 and 3,000, more preferably between 1,500 and 2,500. Also, for such use the resin preferably has a hydroxy number between 50 and 150.

*Crosslinking Agent*

The crosslinking agent is generally included in compositions of the invention in an amount between 5 and 60 weight percent, preferably in an amount between 20 and 50 weight percent based on the weight of the copolymer and crosslinker combined. Selection of the optimal amount of crosslinking agent to be employed in the coating composition is dependent on the desired properties (e.g., flexibility) of the coating as well as its intended use, and selection of such amount would be within the skill of one in the art.

Polyisocyanate crosslinking agents are well known in the art and numerous suitable organic isocyanates having 2 or more reactive isocyanate groups per molecule will be apparent to those skilled in the art. Among the many suitable polyisocyanates are aliphatic, cycloaliphatic and aromatic isocyanate compounds. Representative of the numerous isocyanates which can be employed are (1) aliphatic diisocyanates such as trimethylene diisocyanate, tetramethylene diisocyanate, pentamethylene diisocyanate, hexamethylene diisocyanate, 1,2-propylene diisocyanate, 1,2-butylene diisocyanate, 2,3-butylene diisocyanate, 1,3-butylene diisocyanate, ethylidene diisocyanate, butylidene diisocyanate, 4,4′-bis(isocyanate hexyl) methane, bis(2-isocyanate-ethyl)fumarate, 2,6-diisocyanate methyl caproate, 2,2,4-(2,4,4)-trimethylhexamethylene diisocyanate, and dimer acid diisocyanates; (2) cycloaliphatic diisocyanates such as 1,3-cyclopentane diisocyanate, 1,4-cyclopentane diisocyanate, 1,2-cyclopentane diisocyanate, and methylcyclohexylene diisocyanate; (3) aromatic diisocyanates such as m-phenylene diisocyanate, p-phenylenediisocyanate, 4,4′-diphenyl diisocyanate; (4) aliphatic/aromatic diisocyanates such as 4,4′-diphenylene methane diisocyanates, 2,4- or 2,6-tolylene diisocyanate, 4,4′-toluidene diisocyanate, 1,4-xylylene diisocyanate; (5) nuclear substituted aromatic compounds such as dianisidine diisocyanate, 4,4′-diphenylether diisocyanate, chlorodiphenylene diisocyanate; (6) triisocyanates such as triphenylmethane-4,4′,4′′-triisocyanate, 1,3,5-triisocyanate benzene, 2,4,6-triisocyanate toluene; (7) tetraisocyanates such as 4,4′-diphenyl dimethylmethane 2,2′,5,5′-tetraisocyanate; (8) polymerized isocyanates such as tolylene diisocyanate dimers and trimers and the like; and (9) polyisocyanates such as prepolymers derived from a polyol, including polyether polyols or polyester polyols (including polyethers which are reacted with excess polyisocyanates to form isocyanate terminated prepolymers), simple polyols such as glycols (e.g., ethylene glycol, propylene glycol), other polyols such as glycerol, trimethylol propane, hexane triols, pentaerythritol and the like, as well as monoethers, e.g., diethylene glycol, tripropylene glycol and the like, and polyethers, i.e., alkylene oxide condensates of the above. While the polyisocyanate crosslinking agent may be any organic polyisocyanate as has been noted above, such crosslinking agents for coating composition to be employed as clear (top) coats are preferably aliphatic and cycloaliphatic polyisocyanates, due to their superior weatherability.

Especially preferred for use in clearcoat compositions of the invention are trimerized products of aliphatic diisocyanates such as 1,6-hexamethylene diisocyanate. Still another particularly preferred type of crosslinking agent is a polyisocyanate having a biuret structure. This type of polyisocyanate is well known, as are methods for making the same. Suitable such polyisocyanate crosslinking agents are high molecular weight biurets of 1,6-hexamethylene diisocyanate sold by Mobay Chemical Company under the trademarks Desmodur N and Desmodure L 2291. Exemplary of other biuret type polyisocyanates are those prepared in accordance with U.S. Patent No. 3,976,622 to Wagner et al.

Blocked polyisocyanate crosslinking agents are well known to the skilled of the art and many suitable for use in compositions of the invention are commercially available or readily prepared and will be apparent from the present disclosure. More specifically, blocked polyisocyanate crosslinking agents comprise the reaction product of a polyisocyanate, such as those mentioned above, with a blocking agent, that is, an active hydrogen-bearing reactant. Exemplary blocked polyisocyanates are described, for example, in United States patent 4,497,938. Blocked polyisocyanate crosslinking agents are used generally in the same proportions disclosed above for unblocked polyisocyanate crosslinking agents.

Amine-aldehyde crosslinking agents suitable for crosslinking hydroxy functional bearing materials are

well known in the art. Typically, these crosslinking materials are products of reactions of melamine, or urea with formaldehyde and various alcohols containing up to and including 4 carbon atoms. Preferably, the amine-aldehyde crosslinking agents are amine-aldehyde resins such as condensation products of formaldehyde with melamine, substituted melamine, urea, benzoguanamine or substituted benzoguanamine. Preferred members of this class are methylated melamine-formaldehyde resins such as hexamethoxymethylmelamine. Particularly preferred crosslinkers are the high solids melamine resins which have substantially 95+ percent nonvolatile content. For so-called "high solids" compositions of this invention, it should be recognized that it is important not to introduce extraneous diluents that lower the final solids content of the coating. Other suitable amine-aldehyde crosslinking agents will be apparent to one skilled in the art. Amine-aldehyde crosslinking agents are preferred for basecoat compositions of the invention. The amine-aldehyde crosslinking agent is generally included in a basecoat composition in an amount of between 5 and 60, preferably between 20 and 40 weight percent. However, selection of the particular amount of amine-aldehyde crosslinking agent to be employed in any such composition is dependent on the desired properties of the composition as well as its intended use and would be apparent to one skilled in the art.

Particularly preferred crosslinking agents are the amino crosslinking agents sold by American Cyanamid under the trademark "Cymel". In particular, Cymel 301, 303, 325, 1130, 1156, 1161 and 1168 (trademarks) are alkalated melamine aldehyde resins useful in the compositions of this invention. The crosslinking reactions are catalytically accelerated by acids. One such catalyst, for example, which may be so employed is p-toluene sulfonic acid, which when employed is generally added to the composition in about 0.5% by weight based on the total weight of the polyester graft copolymer and crosslinking agent.

*Additional Materials*

Additional materials which may be employed in the coating compositions of this invention include a high molecular weight linear polyurethane which has a number average molecular weight of between 15,000 and 40,000, preferably between 20,000 and 30,000. It may be made by reacting one of the above mentioned diisocyanates and diols, such as oligoester diol, polycaprolactone diol, polyoxypropylene diol, polyether diols, etc. Suitable high molecular weight linear polyurethane materials are commercially available, for example, as Spenlite LO6-30S, (trademark, Spencer-Kellogg, Buffalo, N.Y.). It has been found that these high molecular weight polyurethanes may be employed in metallic flake pigment-bearing topcoat compositions in small amounts, typically up to 15 weight percent based on the total weight of the polyester graft copolykmer and crosslinking agent, to improve the orientation of the metallic flake pigment in the cured coating. It has been found that by including such linear polyurethane, for example, in a basecoat of a basecoat/clearcoat system, the depth of color and metallic glamour of the system may be improved.

Other materials which may be included in the coating compositions of this invention include, for example, catalysts, antioxidants, U.V. absorbers (for topcoats), solvents, surface modifiers and whitening agents. Solvents used in the coating composition of this invention are those which are commonly used, e.g., to facilitate spray application and high solids content and include toluene, xylene, methylethyl ketone, acetone, 2-ethoxy-1-ethanol, diacetone alcohol, tetrahydrofuran, ethyl acetate, dimethylsuccinate, dimethylglutarate, dimethyladipate and mixtures thereof. The solvent in which the polyester graft copolymer is prepared may be employed as a solvent for the composition, thus eliminating the need for drying the resin after preparation, if such is desired.

Typical ultraviolet light stabilizers that are useful in topcoat compositions of this invention are benzophenones such as dodecyl oxibenzophenone, 2,4-dihydroxybenzophenone, hydroxybenzophenones containing sulfonic groups, 2,4-dihydroxy-3',5'-ditertiarybutylbenzophenone, 2,2',4'-trihydroxybenzophenone esters of dicarboxylic acids, 2-hydroxy-4-acryloxyethoxybenzophenone, aliphatic monoesters of 2,2',4-trihydroxy-4'-alkoxybenzophenone, 2-hydroxy-4-methoxy-2-carboxybenzophenone, triazoles such as 2-phenyl-4-(2'4'-dihydroxybenzolyl)-triazoles, substituted benzotriazoles such as hydroxyphenyltriazoles such as 2-(2'-hydroxy-5'-methylphenyl)benzotriazole, 2-(2'-hydroxyphenyl)benzotriazole, and 2-(2'-hydroxy-5'-octylphenyl)naphthiotriazole.

Another type of ultraviolet light stabilizer and one that is particularly preferred for use in the coatings of this invention is that taught in U.S. patent 4,480,084 entitled "Polymeric Light Stabilizers" to Kordomenos et al. These stabilizers contain the sterically hindered polyalkylpiperidine radical and at least two primary hydroxyl groups available for reacting with the crosslinking agent, e.g., amine-aldehyde or polyisocyanate, of the coating composition.

Typical antioxidants which may be employed in the coating composition include tetrakis alkylene (dialkyl hydroxy aryl) alkyl ester alkanes such as tetrakis methylene 3-(3',5'-di-tert-butyl-4'-hydroxy-phenyl)-proprionate methane (available under the trademark Irganox 1010 from Ciba-Geigy Corp.). Also suitable are the reaction product of p-amino diphenylamine and glycidyl methacrylate, the reaction product of n-hexyl-N'-phenyl-p-phenylene diamine and glycidyl methacrylate, pentaerythritol tetrakis(thioglycolate), trimethylol propane tris(thioglycolate), trimethylol ethane tris(thioglycoate), N-(4-anilinophenyl)-maleimide, alkylhydroxyphenyl groups bonded through carboalkoxy linkages to nitrogen atom of a heterocyclic nucleus containing an imidodicarbonyl group or an imidodithiocarbonyl group, 3,3-ditertbutyl-4-hydroxy-cinnamonitrile, ethyl-3,5-diterthexyl-4-hydroxy-cinnamate, substituted benzyl esters

of beta-substituted (hydroxyphenyl)-propionic acids, bis-(hydroxyphenylalkylene)alkyl isocyanurate compounds, tetrakis hydroxy benzyl phosphonium halides alone or in combination with a dialkylthiodialkanoate, thiodimethylidyne tetrakisphenols alone or in combination with a dialkyl thiodialkanoate or phosphite or phosphonate, dihydrocarbyl-hydroxyphenyl aryl or alkyl phosphonites or phosphonates or phosphates or phosphinites or phosphinates or phosphionites or phosphorothionates or phosphinothionates, diphenyl-bis(3,5-ditertbutyl-4-hydroxyphenoxy)silane, hydrocarbylhydroxyphenyl-dihydrocarbyldithio-carbamates such as 3,5-ditertbutyl-4-hydroxyphenyl dimethyldithiocarbamate and amino benzyl thioether.

In one preferred embodiment a base/clear topcoat system is provided, wherein both the basecoat and the clearcoat comprise a resin and crosslinker composition according to the invention. The basecoat would preferably contain only a benzotriazole U.V. stabilizer such as Tinuvin 328 (trademark, Ciba-Geigy, Ardsley, N.Y.), and the clearcoat would contain a benzotriazole U.V. stabilizer, e.g., Tinuvin 328, the polymeric hindered amine light stabilizer of the aforementioned U.S. patent 4,480,084 to Kordomenos et al and an antioxidant, e.g., Irganox-1010 (trademark; Ciba-Geigy). While preferred combinations of stabilizers and antioxidants have been described, these teachings are not meant to be limiting. Selection of suitable stabilizers and antioxidants is within the skill of one in the art.

Surface modifiers or wetting agents are common additives for liquid paint compositions. The exact mode of operation of these surface modifiers is not known, but it is thought that their presence contributes to better adhesion of coating compositions to the surface being coated and helps formation of thin coatings, particularly on metal surfaces. The choice of surface modifiers or wetting agents is dependent upon the type(s) of surface to be coated. Selection of appropriate surface modifiers is well within the skill of the art. Typical of these surface modifiers are polybutyl acrylate and a wide variety of silicon wetting agents which are commercially available.

For many applications of the coating compositions of the invention, particularly high solids compositions, it may be desirable to employ flow control additives to provide sag free coatings. Among the many such materials which are known are non-aqueous dispersions (NAD's) such as described by Porter (S. Porter, Jr., and B. N. McBane, U.S. Patent No. 4,025,474, May 24, 1977). These particle dispersions may be included generally in an amount up to 15% by weight of the total composition. Other types of NAD's such as described by D. L. Maker and S. C. Peng (U.S. Patent No. 3,814,721, June 4, 1974) or by S. K. Horvath (U.S. application Serial No. 292,853, filed August 14, 1981) also may be included in the coating compositions.

Coating compositions according to certain embodiments of the invention may contain pigments. Thus, for example, primer compositions and the basecoat of a base/clear system may comprise any of the wide variety of suitable pigments which are known to the art and readily commercially available. Selection of suitable pigments and the amount of same will depend largely on the intended use and desired properties of the coating, for example, desired color, hiding properties, etc., and is within the skill of those in the art.

The coating compositions can be applied by conventional methods known to those in the art. These methods include roll coating, spray coating, dipping or brushing. The particular application technique chosen will depend upon the particular substrate to be coated and the environment in which the coating operation takes place. Preferred techniques for applying these coating compositions, particularly when applying the same to automobiles, is spray coating through the nozzle of the spray gun. A basecoat, for example, can be applied as a single component by means of a single component spray gun. On the other hand, in spray applying a two component clearcoat composition, the polyester graft copolymer and additives such as pigments, U.V. absorbers, antioxidants and other nonreactive materials are admixed with a solvent. These materials are fed as one component of a two component system into a spray gun which combines the materials as they are sprayed into the automotive substrate. The other material is the polyisocyanate crosslinking agent, which may or may not be cut with a suitable nonreactive solvent.

The invention will be further understood by referring to the following detailed examples. It should be understood that the specific examples are presented by way of illustration and not by way of limitation. Unless otherwise specified, all references to "parts" are intended to mean parts by weight.

## Example I

Hydroxy functional oligomeric polyester, more specifically, a urethane modified hydroxy functional oligomeric polyester was prepared according to this example. In a suitable reactor 720 g Esterdiol-204 (trademark; Union Carbide, Danbury, Conn.; 2,2-dimethyl-3-hydroxypropyl-2,2-dimethyl-3-hydroxypropionate), 216 g trimethylolpropane, 504 g adipic acid, and 2 g dibutyl tin oxide were charged. The mixture was heated to 148°C (300°F) and water was distilled off until the acid number dropped below 10. The batch was then thinned with 150 parts xylene. The temperature was lowered to 93°C (200°F) and 255 g Desmodur W (trademark; Mobay Chemical Co., diisocyanate) was added dropwise in a period of two hours. After addition was complete, the mixture was postreacted at 93°C (200°F) until no NCO group was observed in an IR spectrum. At this point the batch was thinned with 2245 g xylene. The final product had A viscosity at 39.4% non-volatiles and an acid number of 2.

Example II

Urethane modified hydroxy functional oligomeric polyester was prepared according to this example. In a suitable reactor 1020 g Esterdiol-204 (trademark; Union Carbide), 440 g trimethylolpropane, 730 g adipic acid, and 3.07 g Fascat 4100 (trademark; M&T Chemicals, Inc., Rahway, N.J.; catalyst) were charged. The mixture was heated to 148°C (300°F) and water was distilled off until the acid number dropped below 10. The batch was then thinned with 228 parts xylene. The temperature was lowered to 93°C (200°F) and 438 g Desmodur W (trademark; Mobay Chemical Co.) was added dropwise in a period of two hours. After addition was complete, the mixture was postreacted at 200°F until no NCO group was observed in an IR spectrum. At this point the batch was thinned with 1800 g xylene. The final product had an I—J viscosity at 55.3% non-volatiles.

Example III

Hydroxy functional carbon-carbon double bond-bearing branched polyester macromer was prepared according to this example. In a suitable reactor 1085 g of the resin from Example I and 911 g xylene were charged. The mixture was brought to reflux 148°C (300°F) and any water present was stripped out. The temperature was lowered to 93°C (200°F) and 83 mg hydroquinone and 4.13 g sulfonic acid catalyst CG 21—746 (trademark; Ciba-Geigy) were added. To this mixture 54 g glycidyl methacrylate was added dropwise in a period of 20 minutes. After the end of the addition, the mixture was postreacted at 93°C (200°F) until no oxirane ring was observed in an IR spectrum. The final product had A viscosity at 37% non-volatiles.

Example IV

Hydroxy functional carbon-carbon double bond-bearing branched polyester macromer was prepared according to this example. In a suitable reactor 1085 g of the resin from Example II and 911 g xylene were charged. The mixture was brought to reflux 148°C (300°F) and any water present was stripped out. The temperature was lowered to 93°C (200°F) and 83 mg hydroquinone and 4.13 g of catalyst Shell 1201 (trademark; Shell Chemical Company; phosphine catalyst) were added. To this mixture 54 g glycidyl methacrylate was added dropwise in a period of 20 minutes. After addition was complete, the mixture was postreacted at 93°C (200°F) until no oxirane ring was observed in an IR spectrum. The final product had a viscosity of A at 39.8% non-volatiles.

Example V

Hydroxy functional polyester graft copolymer of the invention was prepared according to this example. In a suitable reactor 300 g Exxate 700 (trademark; Exxon Chemicals; oxyl heptyl acetate solvent), 136 g *n*-butanol, and 7.2 g cumene hydroperoxide were charged. The mixture was brought to reflux 138—148°C (280—300°F). A mixture of 1760 g of the resin from Example IV, 242, g *iso*-butylmethacrylate, 24 g hydroxyethylacrylate, 50 g styrene, 20 g acrylic acid and 7.5 g *t*-butylperbenzoate was added dropwise over a period of 5 hours. The mixture was postreacted at 148°C (300°F) for 2 hours. The temperature was raised and solvent was distilled off to afford a resin with a viscosity of T—U at 70% non-volatiles.

Example VI

Hydroxy functional polyester graft copolymer was prepared according to this example. In a suitable reactor 220 g xylene and 3.6 g cumene hydroperoxide were charged. The temperature was raised to 132°C (270°F) and a mixture of 892 g of the resin from Example III, 121 g butylmethacrylate, 12 g hydroxypropylmethacrylate, 25 g methylmethacrylate, and 3.6 g *t*-butylperbenzoate was added dropwise over a period of 5 hours. The mixture was postreacted at 132°C (270°F) for 2 hours. The temperature was raised to 148°C (300°F) and 450 g xylene were stripped off. The final product had a J viscosity at 59% non-volatiles and an acid number of 1.13.

Example VII

Hydroxy functional polyester graft copolymer was prepared according to this example. In a suitable reactor 220 g xylene and 3.6 g cumene hydroperoxide were charged. The mixture was brought to reflux 148°C (300°F) and any water present was stripped out. The temperature was maintained at 270°F and a mixture of 810 g of the resin from Example III, 121 g *iso*-butylmethacrylate, 24 g hydroxyethylacrylate, 25 g styrene, 12 g acrylic acid, and 3.6 g *t*-butylperbenzoate were added dropwise over a period of 4 hours. The mixture was postreacted at 132°C (270°F) for 2 hours. The temperature was raised to 148°C (300°F) and xylene was stipped off to afford a resin with a Y viscosity at 47% non-volatiles.

Example VIII

Hydroxy functional oligomeric polyester was prepared according to this example. In a suitable reactor 720 g Esterdiol-204 (trademark; Union Carbide Corp.), 490 g Tone 0301 (trademark; Union Carbide Corp.; polycaprolactone triol), 252 g adipic acid, 255 g phthalic anhydride, and 2 g dibutyl tin oxide were charged. The mixture was heated to 177°C (350°F) and water distilled off until the acid number dropped to 5. The temperature was lowered and the batch was thinned with 571 parts xylene. The temperature was raised to 93°C (200°F) and 133 g Desmodur W (trademark; Mobay Chemical Co.; diisocyanate) was added dropwise over a period of 2 hours. The mixture was postreacted at 93°C (200°F) until no isocyanate was observed in an IR spectrum (2270 $cm^{-1}$). The batch was thinned with 1623 g xylene to afford a resin with an A viscosity at 42% non-volatiles.

Example IX

Hydroxy functional acrylate-bearing branched polyester macromer was prepared according to this example. In a suitable reactor 3657 g of the resin from Example VIII, 1.3 g Shell 1201 catalyst (trademark; Shell Chemical Co.), and 0.13 g hydroquinone were charged. The mixture was heated to 66°C (150°F) and 135 g glycidyl methacrylate was added dropwise over a period of 20 minutes. The mixture was postreacted at 66°C (150°F) until the WPE (weight per epoxy) rose above 1600. The final resin had a viscosity of A at 41% non-volatiles.

Example X

Hydroxy functional polyester graft copolymer of the invention was prepared according to this example. In a suitable reactor 660 g xylene and 10.8 g cumene hydroperoxide were charged. The mixture was heated to 132°C (270°F) and a mixture of 2640 of the resin from Example IX, 363 g *iso*-butylmethacrylate, 36 g hydroxyethylacrylate, 75 g styrene, 30 g acrylic acid, and 10.8 g *t*-butylperbenzoate was added dropwise over a period of 4 hours. The mixture was postreacted at 132°C (270°F) for 2 hours. The temperature was raised and 1300 g solvent were distilled off to afford a resin with a viscosity of T at 66% non-volatiles.

Example XI

Hydroxy functional oligomeric polyester was prepared according to this example. In a suitable reactor 498 g triethylene glycol, 71 g trimethylol propane, 197 g 1,4-cyclohexanedimethanol, 1.83 g Fascat 4100 (trademark; M&T Chemicals, Inc.; catalyst), and 0.87 g *para*-toluene sulfonic acid were charged. The mixture was heated to 300°F and water was distilled off until the acid number reached 10.2. The batch was thinned with 148 parts xylene. The temperature was lowered to 200°F and 76 g Desmodur W (trademark; Mobay Chemical Co.; diisocyanate) was added dropwise over a period of 2 hours. After addition was complete, the mixture was postreacted at 93°C (200°F) until no isocyanate group was observed in an IR spectrum (2270 $cm^{-1}$). The resin had a T viscosity at 67% non-volatiles.

Example XII

Hydroxy functional carbon-carbon double bond-bearing branched polyester macromer was made according to this example. In a suitable reactor 700 g of the resin from Example XI, 700 g xylene, 4.6 g Shell 1201 catalyst (trademark; Shell Chemical Co.), and 0.5 g hydroquinone were charged. The mixture was heated to 93°C (200°F) at which time 43 g glycidyl acrylate was added dropwise over a period of 20 minutes. The mixture was postreacted at 93°C (200°F) until the WPE rose above 1800. The final resin had a viscosity of A at 39% non-volatiles.

Example XIII

Hydroxy functional polyester graft copolymer was prepared according to this example. In a suitable reactor were charged 220 g xylene and 3.6 g cumene hydroperoxide. The temperature was raised to 132°C (270°F) and a mixture of 846 g of the resin from Example XII, 121 g butyl methacrylate, 12 g hydroxypropylmethacrylate, 25 g methyl methacrylate, and 3.6 g t-butylperbenzoate was added dropwise over a period of 5 hours. The mixture was postreacted at 132°C (270°F) for 2 hours. The temperature was raised to 148°C (300°F) and solvent was stripped off to afford a final product having viscosity of X at 70% non-volatiles.

Example XIV

Hydroxy functional oligomeric polyester was prepared according to this example. In a suitable reactor 204 g Esterdiol-204 (trademark; Union Carbide Corp.; diol), 66 g trimethylol propane, 75 g dimethyl-1,4-cyclohexanedicarboxylate, 55 g adipic acid and 0.76 g Fascat 4100 (trademark; M&T Chemicals, Inc.; catalyst) were charged. The mixture was heated to 163°C (325°F) and water was distilled off until the acid number dropped below 10. The batch was thinned with 180 parts xylene. The temperature was lowered to 82°C (180°F) and 38 g isophorone diisocyanate was added dropwise over a period of 2 hours. After addition was complete, the mixture was postreacted at 93°C (200°F) until no NCO group was observed in an IR spectrum. The resin had a viscosity of S at 69% non-volatiles.

Example XV

Hydroxy functional carbon-carbon double bond-bearing branched polyester macromer was prepared according to this example. In a suitable reactor 670 g of the resin from Example XIV, 700 g xylene, 4.6 g Shell 1201 catalyst (trademark; Shell Chemical Co.), and 0.5 g hydroquinone were charged. The mixture was heated to 93°C (200°F) at which time 43 g glycidyl methacrylate was added dropwise over a period of 15 minutes. The mixture was postreacted at 93°C (200°F) until the WPE reached 1890. The final resin had a viscosity of A at 40% non-volatiles.

Example XVI

Hydroxy functional polyester graft copolymer was prepared according to this example. In a suitable reactor 300 g Exxate 700 (trademark; Exxon Chemical, oxylheptylacetate solvent), 136 g xylene, and 7.2 g cumene hydroperoxide were charged. The mixture was brought to reflux 143°C (290°F) and a mixture of 1750 g of the resin from Example XV, 242 g *iso*-butylmethacrylate, 24 g hydroxyethylacrylate, 50 g styrene, 20 g acrylic acid, and 7.5 g *t*-butylperbenzoate was added dropwise over a period of 5 hours. The mixture was postreacted at 154°C (310°F) for 2 hours. The temperature was raised to reflux and solvent was distilled off to afford a final resin with a viscosity of Y—Z at 76% non-volatiles.

Example XVII

Hydroxy functional carbon-carbon double bond-bearing branched polyester macromer was prepared according to this example. Into a suitable reactor were placed 485 g triethylene glycol, 71 g trimethylol propane, 323 g dimethyl-1,4-cyclohexanedicarboxylate, 1.75 g dibutyl tin oxide, and 0.87 g of a paratoluene sulfonic acid solution (40% active in butanol). The mixture was heated to 192°C (350°F) and water was distilled off until the acid number dropped to below 6. The mixture was cooled to 79°C (175°F) and 200 g xylene, 0.7 g Shell 1201 catalyst (trademark; Shell Chemical Co.), and 0.07 g hydroquinone were added. To this solution was added dropwise over a period of 15 minutes 73.7 g glycidylmethacrylate. The mixture was postreacted at 99°C (210°F) until the WPE rose above 1500. The resin obtained had a viscosity of A at 62.2% non-volatiles.

Example XVIII

Into a suitable reactor was charged 340 g xylene and 5.2 g cumene hydroperoxide. This solution was heated to 138°C (280°F), at which time dropwise addition of a mixture of 700 g of the resin from Example XVII, 188 g butylmethacrylate, 19 g hydroxypropylmethacrylate, 39 g methyl methacrylate and 5.2 g *t*-butylperbenzoate was begun. The time of addition was 5 hours. After addition was complete the mixture was postreacted for 2 hours at 138°C (280°F). The resin was then stripped of solvent to afford a resin with a viscosity of Q at 74% non-volatiles.

Examples XIX—XXIV

One and two component coatings within the scope of the invention, useful as the clearcoat of a base/clear automotive coating system were formulated according to the compositions shown in Table A. The order of addition was as follows. In the case of one component coatings formulated with Cymel 1130, the resin was mixed with *n*-butylacetate, a UV stabilizer/absorber package, butyl acrylate, methyl amyl ketone, and Tetralin. This mixture was added to a premixed solution of Cymel 1130, blocked acid catalyst, cellosolve acetate, and xylene. The viscosity of the coating was adjusted to 20 sec #4 Ford Cup 27°C (80°F) with xylene. In the case of two component coatings formulated with an organic polyisocyanate, the resin was mixed with *n*-butyl acetate, a UV stabilizer/absorber package, butyl acrylate, methyl amyl ketone, and Tetralin. To this mixture the polyisocyanate, predissolved in xylene and cellosolve acetate, was added just before spraying. The viscosity of the coatings was adjusted to 22 sec #4 Ford Cup 27°C (80°F) with xylene.

TABLE A

| Composition | EXAMPLE XIX | XX | XXI | XXII | XXIII | XXIV |
|---|---|---|---|---|---|---|
| Resin of Example V | 60.8 | 60.8 | 60.8 | | | |
| Resin of Example VI | | | | 72.3 | 72.3 | 72.3 |
| n-butyl acetate | 7.2 | 7.2 | 7.2 | 7.2 | 7.2 | 7.2 |
| UV stabilizer/absorber package[1] | 13.8 | 13.8 | 13.8 | 13.8 | 13.8 | 13.8 |
| Polybutyl acrylate | 0.96 | 0.96 | 0.96 | 0.96 | 0.96 | 0.96 |
| Methyl amyl ketone | 18.18 | 18.18 | 18.18 | 18.18 | 18.18 | 18.18 |
| Tetralin[2] | 12 | 12 | 12 | 12 | 12 | 12 |
| Xylene | 14 | 14 | 10 | 10 | 14 | 14 |
| Cellosolve Acetate | 1 | 1 | 1 | 1 | 1 | 1 |
| Blocked acid catalyst[5] | | | 0.85 | 0.85 | | |
| Cymel 1130[3] | | | 14.1 | 14.1 | | 14.1 |
| Desmodur L-2291[4] | 22.8 | | | | 22.8 | |
| Desmodur N-3390[4] | | 22.8 | | | | 22.8 |

[1]Solution of 25 parts TIN 079L, 8 parts TIN 900, 7 parts TIN 328 (trademarks; Ciba-Geigy); and 60 parts xylene.
[2]1,2,3,4-tetrahydronaphthalene.
[3]Trademark; American Cyanamid Company; hexamethoxymelamine crosslinking agent.
[4]Trademark; Mobay Chemical Corporation; polyisocyanate crosslinking agent.
[5]Nacure 2500X (trademark; King Industries).

Examples XXV—XXXII

Additional clear coat compositions were formulated as shown in Table B. The components are shown in the order of addition. The compositions were reduced to 22 sec #4 Ford Cup 27°C (80°F) with a 60/40 (w/w) blend of Exxate 600 (trademark; Exxon Chemical Co.; solvent) and butyl acetate.

TABLE B

| Composition | EXAMPLE XXV | XXVI | XXVII | XXVIII | XXIX | XXX | XXXI | XXXII |
|---|---|---|---|---|---|---|---|---|
| Resin of Example VII | 84.6 | 84.6 | | | | | | |
| Resin of Example XIII | | | 80.9 | 56.6 | | | | |
| Resin of Example X | | | | | 86.2 | 60.3 | | |
| Resin of Example XVI | | | | | | | 74.5 | 52.1 |
| polybutyl acrylate | 1.6 | 0.76 | 1.7 | 0.3 | 1.7 | 0.3 | 1.7 | .3 |
| Tetralin[1] | 5.4 | 5.4 | 7.0 | 4 | 7.0 | 4 | 7.0 | 4 |
| UV absorber/stabilizer package[2] | 13.9 | 13.9 | 14.4 | 6.9 | 14.4 | 6.9 | 14.4 | 6.9 |
| xylene | 30 | | 26 | | 26 | | 26 | |
| stannous octoate | 0.4 | | 0.45 | | 0.45 | | 0.45 | |
| microgel flow control additive[3] | 2.5 | | 4.6 | | 4.6 | | 4.6 | |
| p-toluene sulfonic acid solution (40% w/w in butanol) | | 1.14 | | 1.14 | | 1.14 | | 1.14 |
| methanol | | 1.8 | | 1.8 | | 1.8 | | 1.8 |
| butanol | | 9.0 | | 9.0 | | 9.0 | | 9.0 |
| Desmodur N-3390[4] | 28 | | 28 | | 28 | | 28 | |
| Cymel 1161[5] | | 12.6 | | 12.6 | | 12.6 | | 12.6 |

[1] 1,2,3,4-tetrahydronaphthalene.
[2] Solution of 25 parts TIN 079L, 8 parts TIN 900, 7 parts TIN 328 (trademarks; Ciba-Geigy) and 60 parts xylene.
[3] Prepared according to Examples 1—3 of U.S. Patent 4,425,450.
[4] Trademark; Mobay Chemical Co.; polyisocyanate crosslinking agent.
[5] Trademark; American Cyanamid Co.; alkylated melamine crosslinking agent.

Example XXXIII

An additional clear coat composition was formulated as shown below. The components were added in the order listed. The composition was reduced to 24 sec #4 Ford Cup 27°C (80°F) with a 60/40 (w/w) blend of butyl acetate and Exxate 600 (trademark; Exxon Chemical Co.; solvent).

128 gms resin from Example XVIII
22.5 g *n*-butanol
4.5 g methanol
10 g Tetralin
17.3 g UV stabilizer/absorber pkg (See Examples XXIV—XIX)
31.5 g Cymel 1130 (trademark; American Cyanamid)
0.75 g polybutylacrylate
2.8 g *p*-toluene sulfonic acid solution (40% solution in butanol)
5.5 g Acryloid B-82 (trademark; Rohm & Haas Co.) solution (25% in xylene).

Examples XXXIV—XXXV

Coating compositions according to the invention, specifically, pigmented basecoat compositions adapted for use in a basecoat/clearcoat automotive topcoat system were prepared according to the formulations shown in Table C. The components were admixed in the order listed. The viscosity was reduced to 18 sec #4 Ford Cup 27°C (80°F) with methyl amyl ketone before spraying.

TABLE C

| Composition | EXAMPLE XXXIV | XXXV |
|---|---|---|
| Resin of Example VI | 139.8 | |
| Resin of Example X | | 125 |
| Spenlite LO6-305[1] | 19.2 | 19.2 |
| Cymel 1130[2] | 52.4 | 52.4 |
| Cymel 1161[2] | 35.2 | 35.2 |
| Tinuvin-328[3] | 9.6 | 9.6 |
| PTSA (40%) | 2.0 | 2.0 |
| 5000-AR[4] | 123 | 123 |
| Microgel flow control additive[5] | 96 | 96 |
| Esterdiol-204[6] | 46 | 46 |
| cellosolve acetate | 19.2 | 19.2 |
| aluminum stearate | 96 | 96 |
| xylene | 15.4 | 15.4 |
| isopropanol | 15.4 | 15.4 |

[1]Trademark; Spencer-Kellog, Buffalo, N.Y.; linear polyurethane modifying agent for aluminum pigment orientation.
[2]Trademark; American Cyanamid Co., Wayne, N.J.; alkylated melamine crosslinking agent.
[3]Trademark; Ciba-Geigy; U.V. absorber.
[4]Trademark; Silberline, Lansford, PA.; aluminum paste.
[5]Prepared according to Examples 1—3 of U.S. Patent 4,425,450.
[6]Trademark; Union Carbide Corp.; diol.

Examples XXXVI—XXXVII

One component enamel compositions were formulated according to the compositions shown in Table D. The order of addition was as follows: The designated resin was mixed with Cymel 1168 (trademark) and Cymel 1130 (trademark) and diluted with denatured ethanol. To this mixture was added a mixture of Bentone 27 gel (trademark; NL Industries; see Example LXVII), the microgel flow control additive and Modarez TMF 25 (trademark; Synthron Corp.) flow control additive. The blocked/unblocked acid catalyst mixture was added followed by the addition of the pigment dispersions. Finally, pine oil and *oxyl*-hexyl acetate were added and the viscosity of the paint was adjusted to 27 sec #4 Ford Cup 27°C (80°F) with Solvesso 100. Bonderite steel panels and plastic panels were sprayed and baked at 250°F for 30 minutes to afford smooth, tough films with excellent flexibility and MEK resistance.

TABLE D

| Composition | EXAMPLE XXXVI | EXAMPLE XXXVII |
|---|---|---|
| Resin of Example XIII | 3497 | 4071 |
| Cymel 1168[1] | 265 | 555 |
| Cymel 1130[1] | 680 | 537 |
| ethanol | 80 | 80 |
| Bentone I27 gel[2] | 650 | 650 |
| Modarez TMF 25[8] | 9 | 9 |
| Microgel flow control additive[3] | 350 | 350 |
| acid catalyst | 450 | 450 |
| blocked acid catalyst | 180 | 180 |
| Tipure R96OHG[4] | 2178 | 2178 |
| yellow iron oxide[5] | 20 | 20 |
| transparent red iron oxide[6] | 1 | 1 |
| Cabot Black Pearls 1300[7] | 3 | 3 |
| pine oil | 150 | 150 |
| oxyl hexyl acetate | 150 | 150 |

[1]Trademark; American Cyanamid Co.; alkylated melamine crosslinking agents.
[2]Prepared according to Example LXVII.
[3]Prepared according to Examples 1—3 of U.S. Patent 4,425,450.
[4]Trademark; E. I. duPont de Nemours & Co., Wilmington, Delaware; pigment
[5]Pfizer Chemical Co.
[6]Hilton Davis Co.
[7]Trademark; Cabot Co.; pigment.
[8]Trademark; Synthron Corp.; flow control additive.

Examples XXXVIII—LI

Base coat/clear coat coating systems according to the present invention were prepared according to these examples. Specifically, the one component base coats and one component clear coats identified in Table E were applied by spraying over metal and plastic substrates. The coatings were cured at 121°C (250°F) for 30 minutes and then tested for flexibility, resistance to methyl ethyl ketone, and resistance to ultra violet light degradation. The test results are shown in Table E.

TABLE E

One Component Base Coat/One Component Clear Coat

| | Example | | | | | | | | | | | | | |
|---|---|---|---|---|---|---|---|---|---|---|---|---|---|---|
| | XXXVIII | XXXIX | XL | XLI | XLII | XLIII | XLIV | XLV | XLVI | XLVII | XLVIII | XLIX | L | LI |
| Basecoat of Example | XXXIV | XXXIV | XXXIV | XXXIV | XXXIV | XXXIV | XXXIV | XXXV | XXXV | XXXV | XXXV | XXXV | XXXV | XXXV |
| Clearcoat of Example | XXXIII | XXI | XXII | XXVI | XXVIII | XXX | XXXII | XXXIII | XXI | XXII | XXVI | XXVIII | XXX | XXXII |
| Percent elongation | 90 | 70 | 80 | 80 | 75 | 75 | 70 | 80 | 65 | 75 | 75 | 65 | 65 | 60 |
| MEK Resistance (100 rubs) | good | exc | exc[1] | exc | good | exc | exc | exc | good | exc | exc | good | good | good |
| QUV (1000 hrs.) | good | exc | exc | exc | good | exc | exc | exc | good | exc | exc | good | good | good |

[1]"Exc" means excellent.

Examples LII—LXVII

Base coat/clear coat coating systems according to the present invention were prepared according to these examples. Specifically, the one component base coats and two component clear coats identified in Table F were applied by spraying over metal and plastic substrates. The coatings were cured at 121°C (250°F) for 30 minutes and then tested for flexibility, resistance to methyl ethyl ketone, and resistance to ultra violet light degradation. The test results are shown in Table F.

TABLE F

One Component Base Coat/Two Component Clear Coat

| | Example | | | | | | | | | | | | | | | |
|---|---|---|---|---|---|---|---|---|---|---|---|---|---|---|---|---|
| | LII | LIII | LIV | LV | LVI | LVII | LVIII | LIX | LX | LXI | LXII | LXIII | LXIV | LXV | LXVI | LXVII |
| Basecoat of Example | XXXIV | XXXIV | XXXIV | XXXIV | XXXIV | XXXIV | XXXIV | XXXIV | XXXIV | XXXV | XXXV | XXXV | XXXV | XXXV | XXXV | XXXV |
| Clearcoat of Example | XIX | XX | XXIII | XXIV | XXV | XXVII | XXIX | XXXI | XIX | XX | XXIII | XXIV | XXV | XXVII | XXIX | XXXI |
| Percent elongation | 90 | 110 | 120 | 130 | 100 | 95 | 95 | 90 | 85 | 100 | 110 | 110 | 90 | 80 | 85 | 80 |
| MEK Resistance (100 rubs) | exc | exc | exc | exc | exc | exc | exc | exc | exc | exc | exc | exc | exc | exc | exc | exc |
| QUV (1000 hrs.) | exc | exc | exc | exc | exc | exc | exc | exc | exc | exc | exc | exc | exc | exc | exc | exc |

Example LXVIII

The organo-clay dispersion employed in certain of the above examples, identified as Bentone 27 gel, was prepared by mixing together in the following order:

| | |
|---|---|
| xylene | 686.g |
| Bentone 27[1] | 36.g |
| propylene carbonate | 12.g |
| Resimene 717[2] | 240.g |

[1]Trademark; National Lead Co.; quaternary ammonium bentonite complex.
[2]Trademark; Monsanto Chemical Co.; alkylated melamine.

*Industrial Applicability*

It will be apparent from the foregoing that this invention has industrial applicability as a protective coating, for example on motor vehicle body panels, and for like applications and provides a flexible, durable coating for metal, plastic and other substrates.

**Claims**

1. Hydroxy functional polyester graft copolymer suitable for flexible, thermosetting coating compositions over metal and plastic substrates, which copolymer has number average molecular weight between 1,000 and 15,000, has a hydroxyl number between 30 and 300, and is the reaction product of carbon-carbon double bond-reactive monoethylenically unsaturated monomer with hydroxy functional carbon-carbon double bond bearing branched polyester macromer, under free radical polymerization reaction conditions, said monomer bearing substantially no functionality which is substantially reactive with hydroxy functionality of said macromer under said reaction conditions and said macromer being the reaction product of (i) epoxy acrylate having the formula:

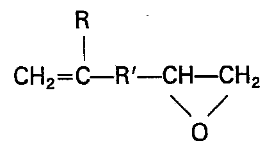

wherein R is hydrogen or C1 to C7 alkyl, and R' is C1 to C7 alkylene or $COO(CH_2)_n$, n being 0 to 7 with (ii) hydroxy functional polyester having 0—10 urethane groups per molecule which polyester comprises the reaction product of dicarboxylic acid with polyol comprising at least 5 percent by weight triol, said dicarboxylic acid being selected from the group consisting of saturated and unsaturated, cyclic and acyclic aliphatic dicarboxylic acids and aromatic dicarboxylic acids suitable anhydrides thereof and mixtures thereof, the weight ratio of macromer:monomer being in the range 90:10 to 40:60.

2. The hydroxy functional polyester graft copolymer of claim 1, wherein said epoxy acrylate is selected from the group consisting of glycidyl acrylater, glycidyl methacrylate and a mixture thereof.

3. The hydroxy functional polyester graft copolymer of claim 1, wherein said epoxy acrylate and said hydroxy functional polyester are reacted in approximately 1:1 molar ratio.

4. The hydroxy functional polyester graft copolymer of claim 1, wherein said carbon-carbon double bond-reactive monoethylenically unsaturated monomer consists of acrylate monomers selected from the group consisting of alkylacrylate, alkyl methacrylate, hydroxyalkylacrylate, hydroxyalkyl methacrylate and mixtures thereof, wherein each alkyl and hydroxyalkyl moiety has one to seven carbons.

5. The hydroxy functional polyester graft copolymer of claim 1, wherein said carbon-carbon double bond-reactive monoethylenically unsaturated monomer consists of monomers selected from the group consisting of acrylic acid, methacrylic acid, styrene, methylacrylate, ethylacrylate, propylacrylate, butylacrylate, methylmethacrylate, ethylmethacrylate, propylmethacrylate, butylmethacrylate, hydroxyethylacrylate, hydroxypropylacrylate, hydroxybutylacrylate, hydroxyethylmethacrylate, hydroxypropylmethacrylate, hydroxybutylmethacrylate and any mixture thereof.

6. The hydroxy functional polyester graft copolymer of claim 1 wherein said dicarboxylic acid is selected from the group consisting of substantially saturated, acyclic, aliphatic dimer acids of 6—36 carbons.

7. The hydroxy functional polyester graft copolymer of claim 1, wherein said dicarboxylic acid is selected from the group consisting of adipic acid, azelaic acid, sebasic acid, dodecane dicarboxylic acid, phthalic anhydride and any mixture thereof.

8. The hydroxy functional polyester graft copolymer of claim 1, wherein said polyol comprises diol and triol in hydroxy equivalent ratio of from 4:1 to 1:4.

9. The hydroxy functional polyester graft copolymer of claim 8, wherein said triol is selected from the groups consisting of trimethylol propane, polycaprolactone triol, and any mixture thereof.

10. The hydroxy functional polyester graft copolymer of claim 8, wherein said diol is aliphatic diol of the general formula HO—R—OH, wherein R is a divalent, aliphatic, linking moiety substantially unreactive with said dicarboxylic acid.

11. The hydroxy functional polyester graft copolymer of claim 10, wherein said aliphatic diol has a molecular weight of 60—500 and is selected from the group consisting of trimethylene glycol, triethylene glycol, 1,4-cyclohexane dimethanol, alkyl substituted or unsubstituted propanediol, butanediol, pentanediol and hexanediol and a mixture of any of them.

12. The hydroxy functional polyester graft copolymer of claim 8 wherein said diol is selected from the group consisting of alkylene glycol of 2—7 carbons, and any mixture thereof.

13. The hydroxy functional polyester graft copolymer of claim 1, wherein said hydroxy functional polyester is urethane modified, said polyol comprising the reaction product of organic diisocyanate with polyhydroxy reactant.

14. The hydroxy functional polyester graft copolymer of claim 13, wherein said diisocyanate is selected from the group consisting of phenylene diisocyanate, biphenyl diisocyanate, toluene diisocyanate, isophorone diisocyanate, 3,3'-dimethyl-4,4'-biphenylene diisocyanate, diisocyanatoalkane wherein the alkane moiety has three to ten carbons and a compatible mixture of any of them.

15. The hydroxy functional polyester graft copolymer of claim 13 wherein said dicarboxylic acid is selected from the group consisting of substantially saturated, acyclic, aliphatic dimer acids of 6—36 carbons.

16. The hydroxy functional polyester graft copolymer of claim 13 wherein said dicarboxylic acid is selected from the group consisting of adipic acid, azelaic acid, sebasic acid, dodecane dicarboxylic acid and any mixture thereof.

17. The hydroxy functional polyester graft copolymer of claim 13, wherein said polyol comprises diol and triol in hydroxy equivalent ratio of from 4:1 to 1:4.

18. The hydroxy functional polyester graft copolymer of claim 17, wherein said diol has molecular weight of 60—500 and is selected from the group consisting of trimethylene glycol, triethylene glycol, 1,4-cyclohexane dimethanol, alkyl substituted or unsubstituted propanediol, butanediol, pentanediol and hexanediol, and a mixture of any of them.

19. The hydroxy functional polyester graft copolymer of claim 17, wherein said triol is selected from the group consisting of trimethylol propane, polycaprolactone triol and any mixture thereof.

20. The hydroxy functional polyester graft copolymer of claim 13 wherein said diisocyanate is selected from the group consisting of phenylene diisocyanate, biphenyl diisocyanate, toluene diisocyanate, isophorone diisocyanate, 3,3'-dimethyl-4,4'-biphenylene diisocyanate, diisocyanatoalkane wherein the alkane moiety has three to ten carbons, and a compatible mixture of any of them.

21. A solvent based flexible coating composition, useful as an automotive coating on metal and plastic substrates, comprising:

A) hydroxy functional polyester graft copolymer as claimed in claim 1.

B) polyfunctional, hydroxy-reactive crosslinking agent selected from aminoplast crosslinking agent, polyisocyanate crosslinking agent, blocked polyisocyanate crosslinking agent comprising at least two isocyanate groups blocked by reaction with active hydrogen bearing blocking agent, and a compatible mixture of any of them, said crosslinking agent being included in an amount sufficient to provide at a cure temperature of said composition, between 0.5 and 1.6 hydroxy reactive groups per hydroxy group contributed by said hydroxy functional polyester graft copolymer.

22. A solvent based, one component, high solids enamel topcoat, adapted for application as a flexible coating on metal and plastics substrates, comprising:

A) hydroxy functional polyester graft copolymer of number average molecular weight 1,500—3,000, having a hydroxyl number between 50 and 150, and 1—7 urethane linkages per molecule, and being the reaction product of carbon-carbon double bond-reactive monoethylenically unsaturated monomer with carbon-carbon double bond-bearing branched polyester macromer under free radical polymerization reaction conditions, said monomer bearing substantially no functionality which is substantially reactive with hydroxy functionality of said macromer under said reaction conditions, said macromer being the reaction product of glycidyl methacrylate with hydroxy functional oligomeric polyester which polyester comprises the reaction product of dicarboxylic acid with polyol comprising at least 5 percent by weight triol, said dicarboxylic acid being selected from the group consisting of saturated and unsaturated, cyclic and acyclic aliphatic dicarboxylic acids and aromatic dicarboxylic acids suitable anhydrides thereof and mixtures thereof, the weight ratio of macromer to monomer being in the range of 90:10 to 40:60; and

B) alkylated melamine crosslinking agent, said crosslinking agent being included in an amount sufficient to provide between 0.5 and 1.6 hydroxy reactive group per hydroxy group of said polyester graft copolymer.

**Patentansprüche**

1. Hydroxyfunktionelles Polyesterpfropfcopolymer, das für flexible, hitzehärtbare Beschichtungszusammensetzungen auf Metall- und Plastiksubstraten geeignet ist, welches Copolymer ein Zahlenmittel-Molekulargewicht zwischen 1 000 und 15 000 hat, eine Hydroxylzahl zwischen 30 und 300 aufweist und das Reaktionsprodukt von kohlenstoffkohlenstoffkohlenstoff-doppelbindungsreaktivem monoethylenisch ungesättigtem Monomer mit hydroxyfunktionellem kohlenstoffkohlenstoff-doppelbindungshaltigem, verzweigtem Polyestermakromer unter Reaktionsbedingungen einer freien radikalischen Polymerisation ist, wobei das Monomer im wesentlichen keine Funktionalität aufweist, die unter diesen Reaktionsbedingungen mit der Hydroxyfunktionalität des Makromers nennenswert reaktiv ist und das Makromer das Reaktionsprodukt von (i) Epoxyacrylat mit der Formel

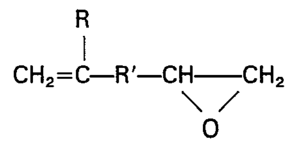

worin R Wasserstoff oder C1—C7-Alkyl ist und R' C1—C7-Alkylen oder $COO(CH_2)_n$ ist, wobei n 0 bis 7 ist, mit (ii) hydroxyfunktionellem Polyester mit 0—10 Urethangruppen pro Molekül ist, welcher Polyester das Reaktionsprodukt von Dicarbonsäure mit Polyol, das wenigstens 5 Gew.-% Triol umfaßt, enthält, wobei die Dicarbonsäure aus der aus gesättigten und ungesättigten, cyclischen und acyclischen aliphatischen Dicarbonsäuren und aromatischen Dicarbonsäuren, geeigneten Anhydriden davon sowie Mischungen davon bestehenden Gruppe ausgewählt ist und das Gewichtsverhältnis Makromer:Monomer im Bereich von 90:10 bis 40:60 liegt.

2. Hydroxyfunktionelles Polyesterpfropfcopolymer nach Anspruch 1, worin das Epoxyacrylat aus der aus Glycidylacrylat, Glycidylmethacrylat und einer Mischung davon bestehenden Gruppe ausgewählt ist.

3. Hydroxyfunktionelles Polyesterpfropfcopolymer nach Anspruch 1, worin das Epoxyacrylat und der hydroxyfunktionelle Polyester in einem molaren Verhältnis von ungefähr 1:1 umgesetzt werden.

4. Hydroxyfunktionelles Polyesterpfropfcopolymer nach Anspruch 1, worin das kohlenstoff-kohlenstoff-doppelbindungsreaktive monoethylenisch ungesättigte Monomer aus Acrylatmonomeren besteht, die aus der aus Alkylacrylat, Alkylmethacrylat, Hydroxyalkylacrylat, Hydroxyalkylmethacrylat und Mischungen davon bestehenden Gruppe, worin jede Alkyl- und Hydroxyalkyleinheit 1 bis 7 Kohlenstoffe hat, ausgewählt sind.

5. Hydroxyfunktionelles Polyesterpfropfcopolymer nach Anspruch 1, worin das kohlenstoff-kohlenstoff-doppelbindungsreaktive monoethylenisch ungesättigte Monomer aus Monomeren besteht, die aus der aus Acrylsäure, Methacrylsäure, Styrol, Methylacrylat, Ethylacrylat, Propylacrylat, Butylacrylat, Methylmethacrylat, Ethylmethacrylat, Propylmethacrylat, Butylmethacrylat, Hydroxyethylacrylat, Hydroxypropylacrylat, Hydroxybutylacrylat, Hydroxyethylmethacrylat, Hydroxypropylmethacrylat, Hydroxybutylmethacrylat sowie beliebigen Mischungen davon bestehenden Gruppe ausgewählt sind.

6. Hydroxyfunktionelles Polyesterpfropfcopolymer nach Anspruch 1, worin die Dicarbonsäure aus der aus im wesentlichen gesättigten, acyclischen, aliphatischen dimeren Säuren mit 6 bis 36 Kohlenstoffen bestehenden Gruppe ausgewählt ist.

7. Hydroxyfunktionelles Polyesterpfropfcopolymer nach Anspruch 1, worin die Dicarbonsäure aus der aus Adipinsäure, Azelainsäure, Sebacinsäure, Dodecandicarbonsäure, Phthalsäureanhydrid sowie beliebigen Mischungen davon bestehenden Gruppe ausgewählt ist.

8. Hydroxyfunktionelles Polyesterpfropfcopolymer nach Anspruch 1, worin das Polyol Diol und Triol in einem Hydroxyäquivalentverhältnis von 4:1 zu 1:4 umfaßt.

9. Hydroxyfunktionelles Polyesterpfropfcopolymer nach Anspruch 8, worin das Triol aus den aus Trimethylolpropan, Polycaprolactontriol sowie beliebigen Mischungen davon bestehenden Gruppen ausgewählt ist.

10. Hydroxyfunktionelles Polyesterpfropfcopolymer nach Anspruch 8, worin das Diol ein aliphatisches Diol der allgemeinen Formel HO—R—OH ist, worin R eine divalente aliphatische verbindende Einheit ist, die im wesentlichen unreaktiv mit der Dicarbonsäure ist.

11. Hydroxyfunktionelles Polyesterpfropfcopolymer nach Anspruch 10, worin das aliphatische Diol ein Molekulargewicht von 60 bis 500 hat und aus der aus Trimethylenglykol, Triethylenglykol, 1,4-Cyclohexandimethanol, alkyl-substituiertem oder unsubstituiertem Propandiol, Butandiol, Pentandiol und Hexandiol sowie einer Mischung beliebiger davon bestehenden Gruppe ausgewählt ist.

12. Hydroxyfunktionelles Polyesterpfropfcopolymer nach Anspruch 8, worin das Diol aus der aus Alkylenglykol mit 2 bis 7 Kohlenstoffen und beliebigen Mischungen davon bestehenden Gruppe ausgewählt ist.

13. Hydroxyfunktionelles Polyesterpfropfcopolymer nach Anspruch 1, worin der hydroxyfunktionelle Polyester urethanmodifiziert ist und das Polyol das Reaktionsprodukt von organischem Diisocyanat mit Polyhydroxyreagens umfaßt.

14. Hydroxyfunktionelles Polyesterpfropfcopolymer nach Anspruch 13, worin das Diisocyanat aus der aus Phenylendiisocyanat, Biphenyldiisocyanat, Toluoldiisocyanat, Isophorondiisocyanat, 3,3'-Dimethyl-4,4'-biphenylendiisocyanat, Diisocyanatoalkan, worin die Alkaneinheit 3 bis 10 Kohlenstoffe hat, sowie einer kompatiblen Mischung beliebiger davon bestehenden Gruppe ausgewählt ist.

15. Hydroxyfunktionelles Polyesterpfropfcopolymer nach Anspruch 13, worin die Dicarbonsäure aus der aus im wesentlichen gesättigten, acyclischen, aliphatischen Dimersäuren mit 6 bis 36 Kohlenstoffen bestehenden Gruppe ausgewählt ist.

16. Hydroxyfunktionelles Polyesterpfropfcopolymer nach Anspruch 13, worin die Dicarbonsäure aus der aus Adipinsäure, Azelainsäure, Sebacinsäure, Dodecandicarbonsäure und einer beliebigen Mischung davon bestehenden Gruppe ausgewählt ist.

17. Hydroxyfunktionelles Polyesterpfropfcopolymer nach Anspruch 13, worin das Polyol Diol und Triol in einem Hydroxyäquivalentverhältnis von 4:1 bis 1:4 umfaßt.

18. Hydroxyfunktionelles Polyesterpfropfcopolymer nach Anspruch 17, worin das Diol ein Molekulargewicht von 60 bis 500 hat und aus der aus Trimethylenglykol, Triethylenglykol, 1,4-Cyclohexandimethanol, alkylsubstituiertem oder unsubstituiertem Propandiol, Butandiol, Pentandiol und Haxandiol sowie einer Mischung beliebiger davon bestehenden Gruppe ausgewählt ist.

19. Hydroxyfunktionelles Polyesterpfropfcopolymer nach Anspruch 17, worin das Triol aus der aus Trimethylolpropan, Polycaprolactontriol und einer beliebigen Mischung davon bestehenden Gruppe ausgewählt ist.

20. Hydroxyfunktionelles Polyesterpfropfcopolymer nach Anspruch 13, worin das Diisocyanat aus der aus Phenylendiisocyanat, Biphenyldiisocyanat, Toluoldiisocyanat, Isophorondiisocyanat, 3,3'-Dimethyl-4,4'-biphenylendiisocyanat, Diisocyanatoalkan, worin die Alkaneinheit 3 bis 10 Kohlenstoffe aufweist, sowie einer kompatiblen Mischung beliebiger davon bestehenden Gruppe ausgewählt ist.

21. Flexible Beschichtungszusammensetzung auf Lösungsmittelbasis, geeignet als Kraftfahrzeugbeschichtung auf Metall- und Plastiksubstraten, welche umfaßt

A) hydroxyfunktionelles Polyesterpfropfcopolymer, wie in Anspruch 1 beansprucht,

B) polyfunktionelles hydroxyreaktives Vernetzungsmittel, ausgewählt aus Aminoplastvernetzungsmittel, Polyisocyanatvernetzungsmittel, blockiertem Polyisocyanatvernetzungsmittel, das wenigstens zwei durch Reaktion mit aktivem Wasserstoff enthaltenden Blockierungsmitteln blockierte Isocyanatgruppen enthält, sowie einer kompatiblen Mischung beliebiger davon, wobei das Vernetzungsmittel in einer Menge einbezogen ist, die ausreicht, bei der Härtungstemperatur der Zusammenzetzung 0,5 bis 1,6 hydroxyreaktive Gruppen pro von dem hydroxyfunktionellen Polyesterpfropfcopolymer beigesteuerter Hydroxygruppe bereitzustellen.

22. Einkomponentiger Decklack auf Lösungsmittelbasis mit hohem Feststoffgehalt, geeignet für den Einsatz als flexible Beschichtung von Metall- und Plastiksubstraten, welcher umfaßt:

A) hydroxyfunktionelles Polyesterpfropfcopolymer mit einem Zahlenmittel-Molekulargewicht von 1 500 bis 3 000, einer Hydroxylzahl zwischen 50 und 150 und 1—7 Urethanbindungen pro Molekül, das das Reaktionsprodukt von kohlenstoff-kohlenstoff-doppelbindungsreaktiven monoethylenisch ungesättigtem Monomer mit kohlenstoff-kohlenstoff-doppelbindungshaltigem verzweigtem Polyestermakromer unter Reaktionsbedingungen einer frei radikalischen Polymerisation ist, wobei das Monomer im wesentlichen keine Funktionalität enthält, die unter diesen Reaktionsbedingungen mit der Hydroxyfunktionalität des Makromers nennenswert reaktiv ist, das Makromer das Reaktionsprodukt von Glycidylmethacrylat mit hydroxyfunktionellem oligomerem Polyester ist, welcher Polyester das Reaktionsprodukt von Dicarbonsäure mit Polyol, das wenigstens 5% Triol umfaßt, enthält, die Dicarbonsäure aus der aus gesättigten und ungesättigten, cyclischen und acyclischen aliphatischen Dicarbonsäuren und aromatischen Dicarbonsäuren, geeigneten Anhydriden davon sowie Mischungen davon bestehenden Gruppe ausgewählt ist und das Gewichtsverhältnis von Makromer zu Monomer im Bereich von 90:10 bis 40:60 liegt, sowie

B) alkyliertes Melaminvernetzungsmittel, wobei das Vernetzungsmittel in einer Menge einbezogen ist, die ausreicht, 0,5 bis 1,6 hydroxyreaktive Gruppen pro Hydroxygruppe des Polyesterpfropfcopolymers bereitzustellen.

**Revendications**

1. Copolymère greffé de polyester à fonctionnalité hydroxyle, convenant pour former des compositions de revêtement thermodurcissables souples appliquées sur des substrats en métal et en matière plastique, lequel copolymère a un poids moléculaire moyen en nombre de 1000 à 15 000 et un indice d'hydroxyle de 30 à 300, et il s'agit du produit de la réaction d'un monomère à insaturation monoéthylénique réactif envers les doubles liaisons carbone-carbone avec un macromère polyester ramifié à fonctionnalité hydroxyle portant des doubles liaisons carbone-carbone, dans des conditions réactionnelles de polymérisation radicalaire, ledit monomère ne portant sensiblement pas de fonctionnalité qui soit sensiblement réactive envers la fonctionnalité hydroxyle dudit macromère dans lesdites conditions réactionnelles et ledit macromère étant le produit de la réaction de (i) un époxy-acrylate de la formule:

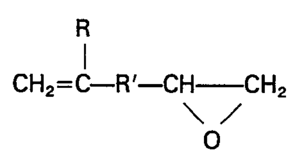

dans laquelle R est l'hydrogène ou un groupe alkyle en $C_1$—$C_7$ et R' est un groupe alkylène en $C_1$—$C_7$ ou $COO(CH_2)_n$, n étant 0 à 7, avec (ii) un polyester à fonctionnalité hydroxyle ayant 0 à 10 groupes uréthanne par molécule, lequel polyester comprend le produit de la réaction d'un acide dicarboxylique avec un polyol comprenant au moins 5 pour cent en poids de triol, ledit acide dicarboxylique étant choisi dans le groupe formé par les acides dicarboxyliques aliphatiques cycliques ou acycliques, saturés ou insaturés, et les acides dicarboxyliques aromatiques, leurs anhydrides appropriés et leurs mélanges, le rapport en poids macromère:monomère étant situé dans l'intervalle de 90:10 à 40:60.

2. Le copolymère greffé de polyester à fonctionnalité hydroxyle de la revendication 1, dans lequel ledit époxy-acrylate est choisi dans le groupe formé par l'acrylate de glycidyle, le méthacrylate de glycidyle et en mélange d'entre eux.

3. Le copolymère greffé de polyester à fonctionnalité hydroxyle de la revendication 1, dans lequel ledit époxy-acrylate et ledit polyester à fonctionnalité hydroxyle sont amenés à réagir en un rapport molaire d'environ 1:1.

4. Le copolymère greffé de polyester à fonctionnalité hydroxyle de la revendication 1, dans lequel ledit monomère à insaturation monoéthylénique réactif envers les doubles liaisons carbone-carbone consiste en acrylates monomères choisis dans le groupe formé par les acrylates d'alkyles, les méthacrylates d'alkyles, les acrylates d'hydroxyalkyles, les méthacrylates d'hydroxyalkyles et leurs mélanges, où chacun des fragments alkyles et hydroxyalkyles compte un à sept atomes de carbone.

5. Le copolymère greffé de polyester à fonctionnalité hydroxyle de la revendication 1, dans lequel ledit monomère à insaturation monoéthylénique réactif envers les doubles liaisons carbone-carbone consiste en monomères choisis dans le groupe formé par l'acide acrylique, l'acide méthacrylique, le styrène, l'acrylate de méthyle, l'acrylate d'éthyle, l'acrylate de propyle, l'acrylate de butyle, le méthacrylate de méthyle, le méthacrylate d'éthyle, le méthacrylate de propyle, le méthacrylate de butyle, l'acrylate d'hydroxyéthyle, l'acrylate d'hydroxypropyle, l'acrylate d'hydroxybutyle, le méthacrylate d'hydroxyéthyle, le méthacrylate d'hydroxypropyle, le méthacrylate d'hydroxybutyle et tout mélange d'entre eux.

6. Le copolymère greffé de polyester à fonctionnalité hydroxyle de la revendication 1, dans lequel ledit acide dicarboxylique est choisi dans le groupe formé par des acides dimères aliphatiques acycliques, sensiblement saturés, de 6 à 36 atomes de carbone.

7. Le copolymère greffé de polyester à fonctionnalité hydroxyle de la revendication 1, dans lequel ledit acide dicarboxylique est choisi dans le groupe formé par l'acide adipique, l'acide azélaïque, l'acide sébacique, l'acide dodécane-dicarboxylique, l'anhydride phtalique, et tout mélange d'entre eux.

8. Le copolymère greffé de polyester à fonctionnalité hydroxyle de la revendication 1, dans lequel ledit polyol comprend un diol et un triol en un rapport d'équivalents d'hydroxyle de 4:1 à 1:4.

9. Le copolymère greffé de polyester à fonctionnalité hydroxyle de la revendication 8, dans lequel ledit triol est choisi dans le groupe formé par le triméthylolpropane, un polycaprolactone-triol, et tout mélange d'entre eux.

10. Le copolymère greffé de polyester à fonctionnalité hydroxyle de la revendication 8, dans lequel ledit diol est un diol aliphatique de la formule générale HO—R—OH, où R est un fragment de jonction aliphatique divalent, sensiblement non réactif envers ledit acide dicarboxylique.

11. Le copolymère greffé de polyester à fonctionnalité hydroxyle de la revendication 10, dans lequel ledit diol aliphatique a un poids moléculaire de 60 à 500 et il est choisi dans le groupe formé par le triméthylène-glycol, le triéthylène-glycol, le 1,4-cyclohexane-diméthanol et le propanediol, le butanediol, le pentanediol et l'hexanediol non substitués ou substitués par un groupe alkyle, et tout mélange d'entre eux.

12. Le copolymère greffé de polyester à fonctionnalité hydroxyle de la revendication 8, dans lequel ledit diol est choisi dans le groupe formé par les alkylène-glycols de 2 à 7 atomes de carbone, et tout mélange d'entre eux.

13. Copolymère greffé de polyester à fonctionnalité hydroxyle de la revendication 1, dans lequel ledit polyester à fonctionnalité hydroxyle est modifié par des groupes uréthanne, ledit polyol comprenant le produit de réaction d'un diisocyanate organique avec un corps réagissant polyhydroxylé.

14. Le copolymère greffé de polyester à fonctionnalité hydroxyle de la revendication 13, dans lequel ledit diisocyanate est choisi dans le groupe formé par le diisocyanate de phénylène, un diisocyanate de diphénylène, un diisocyanate de tolylène, le diisocyanate d'isophorone, le diisocyanate de 3,3'-diméthyl-4,4'-diphénylène, un diisocyanato-alcane dans lequel le fragment alcane compte trois à dix atomes de carbone, et un mélange compatible de plusieurs quelconques d'entre eux.

15. Le copolymère greffé de polyester à fonctionnalité hydroxyle de la revendication 13, dans lequel ledit acide dicarboxylique est choisi dans le groupe formé par les acides dimères aliphatiques acycliques sensiblement saturés de 6 à 36 atomes de carbone.

16. Le copolymère greffé de polyester à fonctionnalité hydroxyle de la revendication 13, dans lequel ledit acide dicarboxylique est choisi dans le groupe formé par l'acide adipique, l'acide azélaïque, l'acide sébacique, l'acide dodécane-dicarboxylique et tout mélange d'entre eux.

17. Le copolymère greffé de polyester à fonctionnalité hydroxyle de la revendication 13, dans lequel ledit polyol comprend un diol et un triol en un rapport d'équivalents d'hydroxyle de 4:1 à 1:4.

18. Le copolymère greffé de polyester à fonctionnalité hydroxyle de la revendication 17, dans lequel ledit diol a un poids moléculaire de 60 à 500 et il est choisi dans le groupe formé par le triméthylène-glycol, le triéthylène-glycol, le 1,4-cyclohexane-diméthanol et le propanediol, le butanediol, le pentanediol et

l'hexanediol non substitués ou substitués par un groupe alkyle, et un mélange de plusieurs quelconques d'entre eux.

19. Le copolymère greffé de polyester à fonctionnalité hydroxyle de la revendication 17, dans lequel ledit triol est choisi dans le groupe formé par le triméthylolpropane, un polycaprolactone-triol et tout mélange d'entre eux.

20. Le copolymère greffé de polyester à fonctionnalité hydroxyle de la revendication 13, dans lequel ledit diisocyanate est choisi dans le groupe formé par le diisocyanate de phénylène, un diisocyanate de diphénylène, un diisocyanate de tolylène, le diisocyanate d'isophorone, le diisocyanate de 3,3'-diméthyl-4,4'-diphénylène, un diisocyanato-alcane dans lequel le fragment alcane compte trois à dix atomes de carbone, et un mélange compatible de plusieurs quelconques d'entre eux.

21. Une composition de revêtement souple à base de solvant, utile comme revêtement d'automobile appliqué sur des substrats en métal et en matière plastique, comprenant:

A) un copolymère greffé de polyester à fonctionnalité hydroxyle tel que revendiqué dans la revendication 1,

B) un agent de réticulation polyfunctionnel réactif envers les groupes hydroxyle, choisi parmi un agent de réticulation du type aminoplaste, un agent de réticulation du type polyisocyanate, un agent de réticulation du type polyisocyanate bloqué comprenant au moins deux groupes isocyanate bloqués par réaction avec un agent de blocage portant de l'hydrogène actif, et un mélange compatible de plusieurs quelconques d'entre eux, ledit agent de réticulation étant inclus en une quantité suffisante pour fournir, à une température de durcissement de ladite composition, entre 0,5 et 1,6 groupe réactif envers les groupes hydroxyle par groupe hydroxyle apporté par ledit copolymère greffé de polyester à fonctionnalité hydroxyle.

22. Une couche finale d'émail à forte teneur en matière sèche, en un seul composant, à base de solvant, convenant pur être appliquée comme revêtement souple sur des substrats en métal et en matière plastique, comprenant:

A) un copolymère greffé de polyester à fonctionnalité hydroxyle ayant un poids moléculaire moyen en nombre de 1500 à 3000, un indice d'hydroxyle de 50 à 150, et 1 à 7 liaisons uréthanne par molécule, et qui est le produit de réaction d'un monomère à insaturation monoéthylénique réactif envers les doubles liaisons carbone-carbone avec un macromère polyester ramifié à fonctionnalité hydroxyle portant des doubles liaisons carbone-carbone dans des conditions réactionnelles de polymérisation radicalaire, ledit monomère ne portant sensiblement pas de fonctionnalité qui soit sensiblement réactive envers la fonctionnalité hydroxyle dudit macromère dans lesdites conditions réactionnelles, ledit macromère étant le produit de réaction du méthacrylate de glycidyle avec un polyester oligomère à fonctionnalité hydroxyle, lequel polyester comprend le produit de réaction d'un acide dicarboxylique avec un polyol comprenant au moins 5 pour cent en poids de triol, ledit acide dicarboxylique étant choisi dans le groupe formé par les acides dicarboxyliques aliphatiques cycliques ou acycliques, saturés ou insaturés, et les acides dicarboxyliques aromatiques et leurs anhydrides appropriés et leurs mélanges, le rapport en poids du macromère au monomère se situant dans l'intervalle de 90:10 à 40:60; et

B) un agent de réticulation du type mélamine alkylée, ledit agent de réticulation étant inclus en une quantité suffisante pour fournir 0,5 à 1,6 groupe réactif envers les groupes hydroxyle par groupe hydroxyle dudit copolymère greffé de polyester.